# FASCICULE DE BREVET EUROPEEN

(11) **EP 1 192 797 B1**
(45) Date de publication et mention de la délivrance du brevet: **02.11.2005**
(21) Numéro de dépôt: 00949688.6
(22) Date de dépôt: 07.07.2000
(51) Int. Cl.: H04M 17/02

(54) **GESTION DE TELEPHONES PUBLICS**
VERWALTUNG VON MÜNZFERNSPRECHERN
PAYPHONE MANAGEMENT SYSTEM

(30) Priorité: 09.07.1999 FR 9908922
(43) Date de publication de la demande: 03.04.2002
(73) Titulaire: SPT PUBLICOM, 92120 Montrouge (FR)
(72) Inventeur: GRUNENWALD, Rodolphe, F-94340 Joinville-le-Pont (FR)
(74) Mandataire: Weihs, Bruno Konrad
(86) Numéro de dépôt international: PCT/FR2000/001986
(87) Numéro de publication internationale: WO 2001/005138

(56) Documents cités:
- EP-A- 0 468 913
- EP-A- 0 746 137
- WILLIAMS L D L: "PAYPHONE REMOTE MANAGEMENT SYSTEMS" BRITISH TELECOMMUNICATIONS ENGINEERING,GB,BRITISH TELECOMMUNICATIONS ENGINEERING. LONDON, vol. 11, no. PART 02, 1 juillet 1992 (1992-07-01), pages 85-89, XP000297298 ISSN: 0262-401X
- MEADE P: "CYBERBOOTHS: THE NEW PAYPHONE?" AMERICA'S NETWORK,US,ADVANSTAR COMMUNICATIONS, CLEVELAND, OH, vol. 101, no. 11, 1 juin 1997 (1997-06-01), page 44,46 XP000856676 ISSN: 0040-263X

## Description

La présente invention concerne un système de téléphonie publique comportant des téléphones publics destinés à communiquer avec des serveurs, tels que des serveurs d'informations ou de service du Web et de l'Internet. La présente invention concerne plus particulièrement une interface de communication assurant la liaison entre les téléphones publics et tout ou partie des serveurs accédés par ces téléphones publics.

Un réseau de téléphonie publique se compose de téléphones publics répartis sur un territoire donné. Les téléphones publics sont connectés à un réseau de communication, constitué par exemple par le réseau téléphonique commuté PSTN (acronyme anglo-saxon pour Public Switching Telephone Network), avec lequel ils communiquent au moyen d'un modem.

Un réseau de téléphonie publique, comporte généralement un (ou plusieurs) serveur de gestion, souvent appelé PMS (acronyme du terme anglo-saxon « Payphone Management System »), permettant à l'opérateur du réseau d'opérer la supervision des différents téléphones. Ce serveur, qui est connecté par modem au réseau téléphonique commuté, a pour fonction d'échanger avec le parc de téléphones des informations relatives au fonctionnement du système de téléphonie.

Par ailleurs, les réseaux de téléphonie publique sont confrontés à la nécessité de fournir d'autres prestations que la simple transmission de la voix entre deux postes de téléphones. En particulier, il devient important de pouvoir offrir l'accès à des serveurs de type privé ou encore des serveurs d'informations et de services de l'Internet et du Web.

Il en résulte donc que les téléphones publics sont confrontés à la nécessité de se connecter à une pluralité de serveurs. Or, l'adaptation d'un téléphone et plus particulièrement d'un téléphone public pour permettre la connexion à des serveurs d'information et notamment à l'Internet et au Web, pose de nombreuses difficultés techniques.

La présente invention vise donc à remédier à ces inconvénients en simplifiant et en rationalisant la connexion des téléphones publics aux différents serveurs qui lui sont nécessaires pour fonctionner, allégeant ainsi les opérations de maintenance des opérateurs de système de téléphonie publique et donc la rentabilité de ces systèmes.

Le document Meade P : 'Cyberbooths : the new payphone ?' America's network, US, advanstar communication, cleveland, OH, vol. 101, no. 11, 1 juin 1997, page 44, 46 ISSN 0040-263X décrit un système de téléphonie dans lequel sont installés des kiosques. Chaque kiosque peut contenir des téléphones et des terminaux internet. Les téléphones comportent un port modem permettant de relier un ordinateur au réseau téléphonique par le biais d'un modem. Les terminaux internet sont des ordinateurs connectés au réseau téléphonique afin d'établir une connexion avec un fournisseur d'accès à internet. Toutefois ce document ne fait aucune mention de connexion entre un téléphone et un ou plusieurs serveurs qui lui sont nécessaire pour fonctionner.

Le système de téléphonie publique selon l'invention comprend une pluralité de téléphones publics destinés à communiquer avec des serveurs à travers au moins un réseau de communication.

Selon l'invention, le système de téléphonie selon l'invention est caractérisé en ce qu'il comporte une interface de communication apte à contrôler les communications entre les téléphones publics et au moins un premier groupe de serveurs.

Selon une autre caractéristique du système de téléphonie publique, l'interface de communication ne contrôle pas les communications entre les téléphones publics et les serveurs n'appartenant pas au premier groupe précité.

Selon une autre caractéristique du système de téléphonie publique, l'interface de communication est apte à contrôler les communications entre l'ensemble desdits serveurs et les téléphones publics.

Selon une autre caractéristique du système de téléphonie publique, les adresses des serveurs dont les communications avec les téléphones publics sont contrôlées par l'interface de communication sont stockées dans des mémoires de ladite interface de communication, les téléphones publics ne disposant alors que de l'adresse de l'interface de communication.

Selon une autre caractéristique du système de téléphonie publique, l'interface de communication comprend des moyens aptes à traduire les sessions d'échanges d'informations transitant par ladite interface de communications entre les téléphones publics et les serveurs, lorsque ces sessions s'établissent avec des serveurs utilisant des protocoles de communication distincts de ceux des téléphones publics.

Selon une autre caractéristique du système de téléphonie publique, chacun des téléphones publics est équipé de protocoles TCP/IP de communication Internet et en ce que les communications entre lesdits téléphones et lesdits serveurs utilisent lesdits protocoles.

Selon une autre caractéristique du système de téléphonie publique, les serveurs accédés par les téléphones publics comprennent des serveurs d'informations ou de fourniture de services du Web et de l'Internet et/ou des serveurs d'informations privés et/ou des serveurs dédiés à la gestion des téléphones publics.

Selon une autre caractéristique du système de téléphonie publique, l'interface de communication comprend des moyens aptes à synchroniser et réguler les sessions d'échanges d'informations entre les téléphones publics et les serveurs, en ce qui concerne les sessions transitant par l'interface de communications.

Selon une autre caractéristique du système de téléphonie publique, l'interface de communication comprend des moyens aptes à authentifier les sessions d'échanges d'informations entre les téléphones publics et les serveurs, en ce qui concerne les sessions transitant par l'interface de communications.

Selon une autre caractéristique du système de téléphonie publique, l'interface de communication comprend des moyens aptes à détecter les éventuels virus affectant les fichiers transmis lors des sessions d'échanges d'informations entre les téléphones publics et les serveurs, en ce qui concerne les sessions transitant par ladite interface de communications.

La description qui va suivre en regard du dessin annexé, donné à titre d'exemple non limitatif fera bien comprendre en quoi consiste l'invention et comment elle peut être réalisée.

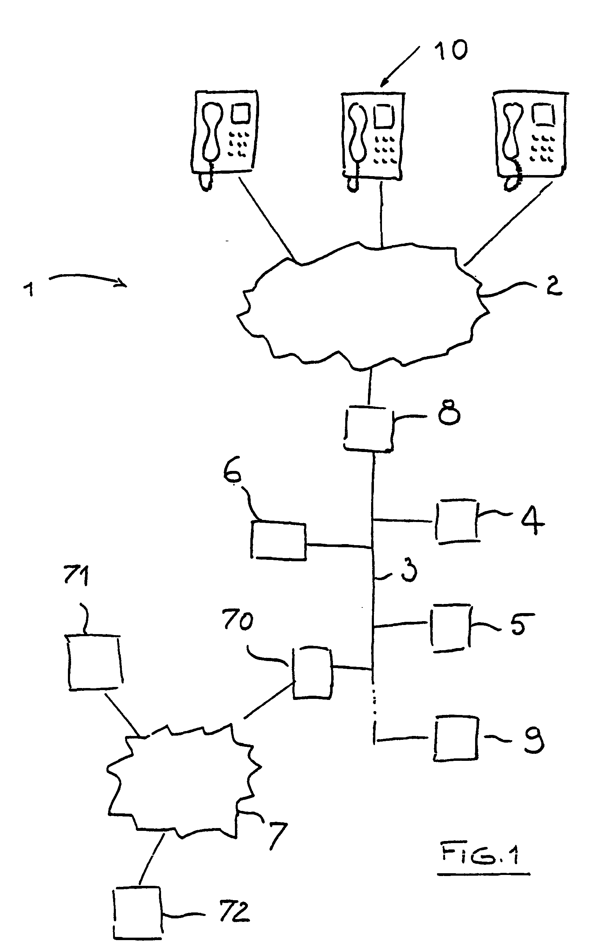

La figure 1 est une vue schématique d'un réseau de téléphonie publique selon l'invention.

Seuls les éléments du réseau de téléphonie publique et de son environnement nécessaires à la compréhension de l'invention, ont été figurés.

Sur la figure 1, on a représenté un réseau 1 de téléphonie publique. Ce réseau comprend un parc de téléphones publics 10 (parc comprenant de plusieurs centaines à plusieurs milliers de téléphones, voire plusieurs dizaine de milliers, suivant la couverture territoriale).

Les téléphones publics 10 sont destinés à être utilisés par le public en libre service et sont donc installés à cette fin dans des lieux publics, tels que la rue, ou semi-publics, tels que des centres commerciaux, des aéroports, halls d'hôtels, restaurants, magasins, etc.

Ces téléphones publics 10 permettent aux usagers d'effectuer des communications téléphoniques à destination de téléphones privés ou publics, en utilisant un réseau téléphonique approprié référencé 2. Ce réseau téléphonique 2 est de type commuté analogique PSTN (Public Switching Telephone Network) ou de type numérique ISDN (Integrated Services Digital Network). Ce réseau 2 peut également être constitué par un réseau de radiotéléphonie mobile et ce, quelle que soit sa nature : GSM, CDMA, TDMA, AMPS, D-AMPS, ou encore par le réseau Internet, ou plus généralement par tout réseau de communication apte à transmettre des données (X25, Ethernet,..) ainsi que par toute combinaison de tels réseaux.

Les téléphones publics 10 sont également adaptés, comme cela sera détaillé ci-dessous, pour accéder à des serveurs d'informations ou de fourniture de services 71, 70 du Web et de l'Internet 7, ainsi qu'à des serveurs d'informations ou de fourniture de services privés 9. De tels accès permettent à l'opérateur exploitant le réseau 1, de proposer aux usagers une large palette de nouveaux services, allant par exemple et à titre non limitatif, de la lecture de leurs courriers électroniques à la consultation d'informations locales (listes des médecins de gardes de la zone du téléphone public, etc...).

Dans la présente description, on appellera serveurs privés, des serveurs propriétés d'opérateurs qui ne sont accessibles que sur des réseaux privés de type LAN (Local Area Network) ou WAN (Wide Area Network) et ce, sous réserve d'avoir une autorisation appropriée. Ces serveurs privés diffèrent des serveurs du Web et de l'Internet qui sont par définition d'accès libre et public.

Bien évidemment l'invention n'est pas limitée aux téléphones publics offrant de tels accès à l'Internet et à des serveurs privés. La présente invention concerne également les téléphones publics qui offrent seulement un accès à l'Internet ou seulement un accès à des serveurs privés, voire même les téléphones publics qui n'offrent aucun de ces nouveaux services à l'usager.

Ces téléphones publics 10 sont par ailleurs adaptés pour accéder à des serveurs 4, 5, 6 dédiés plus spécifiquement au fonctionnement et à la gestion du réseau de téléphonie publique 1.

Le serveur 5 assure la gestion des téléphones publics 10. Ce serveur 5 est encore appelé PMS (acronyme anglo-saxon de « Payphone Management System »). Le PMS 5 a pour fonction d'échanger avec le parc de téléphones publics 10 des informations concernant leur fonctionnement et plus généralement le fonctionnement du système de téléphonie publique. De plus, le serveur PMS 5 gère les sessions d'initialisation des téléphones publics et établit des données statistiques à partir des informations reçues des téléphones publics 10.

Les téléphones publics 10 et le PMS 5 sont munis de moyens appropriés de supervision et de réception/émission d'informations, ces moyens qui sont en eux-mêmes connus ne seront pas décrits plus en détail. Ces moyens de supervision et de réception/émission sont chargés d'organiser les échanges d'informations entre les téléphones publics 10 et le PMS 5 ou le serveur FTP 4 dont le rôle sera détaillé ci-dessous, en particulier de contrôler des transferts de données, fichiers et/ou logiciels, entre les téléphones publics 10 et le serveur FTP 4.

Il s'agit notamment de transférer vers les téléphones publics 10, les fichiers nécessaires à leur fonctionnement, tels que des tables de tarifs, des paramètres de configuration concernant le type de numérotation, des listes d'opposition ou de surveillance des moyens de paiement utilisés, ou encore des fichiers de statut des téléphones publics. Les téléphones publics 10 transmettent de leur côté, des informations relatives à leur utilisation, à savoir un rapport journalier comportant des données relatives aux transactions effectuées, au trafic, et un rapport d'alarmes qui permet de signaler au PMS 5 la survenue d'incidents ou des atteintes à leur intégrité, comme une panne sur le lecteur de cartes ou un combiné arraché, de manière à prévoir l'intervention d'un agent de surveillance.

Pour faciliter les échanges de données, on utilise un serveur spécifique 4, appelé FTP (pour File Transfer Protocol). A partir de commandes reçues par le PMS 5, chaque téléphone public 10 va se connecter au FTP 4 et télécharger ou télédécharger les données appropriées.

Par ailleurs, les téléphones publics 10 peuvent se connecter à un serveur 6 servant d'interface de communication entre les téléphones publics 10 et les serveurs, serveur appelé PROXY. Les fonctions du PROXY 6 seront plus précisément détaillées ci-après.

Pour accéder au Web et à l'Internet 7, les téléphones 10 utilisent un fournisseur de services Internet 70 encore appelé ISP (Internet Services Provider). Les serveurs accessibles du Web et de l'Internet 7, sont des serveurs d'informations ou de services 71, 72, tels que des serveurs de courrier électroniques ou encore des serveurs de commerce électroniques.

Le serveur privé 9 peut quant à lui gérer des services adaptés au réseau de téléphonie publique, comme de la publicité, l'horoscope, la météo, des services municipaux, etc...

Les services proposés à l'usager, que se soit la possibilité d'appeler un autre poste téléphonique ou la possibilité de se connecter à l'Internet ou à des serveurs d'informations privés sont classiquement facturés soit au niveau du téléphone public même, par le biais de pièces de monnaie, de cartes pré-payées, de porte-monnaie électroniques, ou autres moyens équivalents, ou facturées de façon différée, par le biais de cartes bancaires ou de cartes d'abonné par exemple.

Ces téléphones publics 10 sont, de façon connue, des terminaux conçus spécialement pour leur utilisation en site public ou semi-public. Ils présentent donc des spécificités en terme d'éléments constitutifs et de logiciels (microprocesseur, mémoire, etc...), de consommation énergétique, d'ergonomie, d'utilisation, etc..., qui sont bien connus en eux-mêmes et ne sont pas détaillés plus avant.

Chaque téléphone public 10 comprend donc, un certain nombre d'éléments particuliers, inhérents à un téléphone public, en particulier pour l'ergonomie. On trouve notamment des organes de visualisation et de saisie de données, comme un écran 11 et un clavier 12 à touches. D'autre part, le téléphone public 10 met en oeuvre des logiciels permettant d'échanger et de représenter les informations selon des formats spécifiques mieux adaptés à son ergonomie, bien que fonctionnant selon les principes des liens hypermédia.

En particulier, chaque téléphone public 10 intègre dans ces circuits électroniques les ressources matérielles et surtout logicielles, tel qu'un navigateur, nécessaires à la mise en place et au fonctionnement d'une interface homme-machine permettant d'accéder au Web et à l'Internet 7 ou bien encore consulter les serveurs d'informations privés dans le cas ou le téléphone 10 offre de tels services.

Par ailleurs, pour permettre la connexion aux différents serveurs et notamment au PROXY 6, les téléphones 10 sont équipés de protocoles de communication TCP/IP conformes aux recommandations techniques de l'IETF (« Internet Engineering Task Force »).

Les serveurs auxquels peuvent se connecter les téléphones publics 10 du réseau de téléphonie 1 selon l'invention, se répartissent schématiquement en deux ensembles distincts. Un premier ensemble regroupe les serveurs mettant en oeuvre des applications complexes nécessitant des protocoles de communication élaborés tels que ceux (http,...) requis par les serveurs 71, 72 de l'Internet et du Web, le serveur privé 9 ou encore le serveur PMS 5, protocoles de communication qui diffèrent de celui utilisé dans les téléphones publics 10. Le second groupe est formé par les serveurs mettant en oeuvre des applications de moindre complexité, tel que le serveur FTP 4, serveurs qui utilisent le même protocole que les téléphones 10 ou un protocole compatible.

Selon un premier mode de réalisation de l'invention, tout accès d'un téléphone 10 à l'un des serveurs du premier groupe passe par le serveur spécifique PROXY 6 tandis que les accès aux serveurs du second groupe s'effectuent directement sans l'entremise du PROXY 6. Selon ce mode de réalisation, le serveur FTP 4 n'est pas connecté au PROXY 6. En effet, compte tenu de la spécificité du serveur FTP 4, cette connexion n'est pas nécessaire, mais il reste toutefois sous le contrôle du serveur 5 de supervision.

Selon un autre mode de réalisation, tout ou partie des serveurs utilisant un protocole identique ou compatible avec celui des téléphones 10, peuvent être intégrés au premier groupe, la composition de chaque groupe reposant alors sur d'autres critères que la seule compatibilité ou non des protocoles.

Selon un autre mode de réalisation, le PROXY 6 peut également servir de passage obligé pour accéder aux serveurs du second groupe, et donc alors à tous les serveurs susceptibles d'être appelés par le téléphone public 10. En variante, l'accès aux serveurs du second groupe par le PROXY 6 peut être limité à une partie seulement de la communication.

Selon le mode de réalisation décrit à la figure 1, le serveur PROXY 6 ainsi d'ailleurs que les serveurs 4, 5 et 9 sont accessibles sur un réseau 3 distinct du réseau 2. Ce réseau 3 est par exemple un réseau Ethernet ou Token Ring. Bien évidemment, la localisation des serveurs 4, 5 et 9 sur le réseau 3 n'est pas limitative de l'invention. Ainsi, tout ou partie de ces serveurs pourraient être localisés sur d'autres réseaux.

Ainsi que le montre la figure 1, la connexion entre le réseau PSTN 2 et le réseau Ethernet 3 de transport d'informations est opérée par l'intermédiaire d'un routeur NAS 8 (Network Access Server), ce routeur NAS est chargé de mettre en communication les téléphones 10 avec les serveurs 4, 5, 6, 71, 72, 9 par routage via des adresses IP attribuées aux serveurs. La couche physique des téléphones est ici réalisée par des modems analogiques ou numériques (ISDN). De façon pratique le routeur 8 peut être constitué par un routeur de type 3620 CH, fabriqué par la société Cisco.

Ce routeur assure l'interconnexion des réseaux 2 et 3 et concerne plus donc particulièrement des couches basses (1 à 3) selon la nomenclature IETF (Internet Engineering Task Force). Par ailleurs, le routeur NAS 8 gère une table des adresses IP des différents serveurs présents et accessibles sur le réseau 3.

Bien évidemment, cette architecture n'est pas limitative de l'invention et tout autre dispositif permettant la communication des téléphones publics 10 avec le serveur PROXY 6 peut être utilisé.

Le PROXY 6 combine différentes fonctions. Une première fonction consiste à orienter les requêtes des téléphones publics 10, suivant la nature de ces requêtes, vers les serveurs correspondants. Il s'agit là d'une fonction de re-routage qui permet de ne stocker et de ne mettre à jour la liste des adresses des serveurs susceptibles d'être appelés par les téléphones 10 que dans le PROXY 6 et non dans chacun des terminaux téléphoniques 10, ces derniers n'ayant alors besoin que de connaître la seule adresse du PROXY 6.Cette disposition facilite considérablement les opérations de maintenance du réseau de téléphonie publique.

Ainsi, pour communiquer avec le PMS 5, il suffit à un téléphone d'adresser un message au PROXY 6, message dont l'entête, par exemple « PMScall », suffit à être interprété par le PROXY 6 comme un message destiné au PMS 5. A charge alors pour le PROXY 6 de trouver dans ses mémoires, l'adresse IP du PMS 5 et de lui transmettre le message.

Une seconde fonction consiste, quand cela est nécessaire, à traduire les données ou instructions émises par les téléphones 10 au format des serveurs destinataires. Ainsi pour les connexions à l'Internet et au Web, il s'agit de traduire le protocole utilisé par les téléphones publics 10 en protocole http, et inversement pour transférer les informations du Web et de l'Internet vers les téléphones 10.

Une autre fonction du PROXY 6 est de synchroniser et réguler les sessions d'échange d'informations entre les téléphones 10 et les serveurs. Une autre fonction est d'établir des sessions d'échange d'informations fiables et authentifiées qui consiste par exemple à identifier de façon certaine les téléphones 10 lors d'un échange d'informations avec les serveurs, ou encore à encrypter les données afin de sécuriser la communication en cas de besoin.

Une autre fonction du PROXY 6 est de piloter et réguler les échanges d'informations réalisés via des transferts de fichiers standards et conformes aux protocoles Internet. Au cours de ces transferts, le PROXY 6 devra notamment détecter les virus pouvant infecter les fichiers.

Le serveur 6 a également pour fonction de diriger les requêtes des téléphones publics vers des serveurs de secours notamment en cas d'indisponibilité d'un serveur et assurer ainsi une redondance d'architecture. Ainsi, dans l'hypothèse où le PROXY 6 se trouve inaccessible par suite notamment d'opérations de maintenance, il est alors possible de diriger les comptes-rendus journaliers des téléphones publics 10 correspondants vers un autre serveur de gestion alors disponible. Ce basculement d'un serveur vers un autre étant alors totalement transparent pour les téléphones publics 10 qui n'ont pas ainsi à gérer eux-mêmes des adresses de secours mais seulement l'adresse du PROXY 6.

De façon pratique, le PROXY 6, peut être constitué d'un ordinateur de type PC fonctionnant sur Windows NT (marque déposée). Toute requête de connexion à un serveur parvient sur le port d'entrée de l'ordinateur qui est écouté en permanence par le PROXY 6, puis est redirigé vers un port de travail. La requête est ensuite analysée par une application logicielle, par exemple en langage Java (marque déposée) permettant le contrôle et l'établissement d'une session au sens protocolaire du terme. Une interface standard (« socket ») est alors ouverte et la requête est émise vers le serveur de destination, et inversement.

Bien évidemment, le mode de réalisation illustré n'a été donné qu'à titre d'exemple et n'est absolument pas limitatif de l'ensemble des solutions pouvant être mise en oeuvre grâce à la présente invention.

Ainsi, le PROXY 6, le serveur PMS 5 et le serveur FTP 4, au lieu d'être des machines séparées comme sur la figure 1, peuvent être regroupés dans un seul ordinateur de type PC par exemple.

Ainsi le réseau des téléphones publics décrit précédemment peut être remplacé par n'importe quel réseau d'appareils ayant un besoin de transmettre des informations notamment à un serveur de gestion, par exemple des horodateurs, des distributeurs automatiques ou encore des terminaux bancaires.

## Revendications

1. Système de téléphonie (1) comportant une pluralité de téléphones publics (10) destinés à communiquer avec des serveurs (4,5,6,71,72,9) à travers au moins un réseau de communication (2,3), **caractérisé en ce qu'**il comporte une interface de communication (6) apte à contrôler les communications entre lesdits téléphones publics (10) et au moins un premier groupe de serveurs (5,71,72,9).

2. Le système de téléphonie selon la revendication 1, dans lequel les téléphones publics comprennent des moyens pour adresser toute communication vers l'inteiface de *communication (6) qui sert de passage obligé pour les communications émanant des téléphones publics (10) à destinations d'un serveur.*

3. Le système de téléphonie selon la revendication 1, dans lequel l'interface de communication (6) comprend des moyens pour orienter des requêtes des téléphones publics (10) vers des serveurs correspondant selon la nature des requêtes.

4. Système selon l'une quelconque des revendications précédentes, **caractérisé en ce que** les adresses des serveurs (5,71,72,9) dont les communications sont contrôlées par l'interface de communication (6) sont stockées dans des mémoires de ladite interface de communication (6), les téléphones publics ne disposant alors que de l'adresse de l'interface de communication (6).

5. Système selon l'une quelconque des revendications précédentes, **caractérisé en ce que** ladite interface de communication (6) comprend des moyens aptes à traduire les sessions d'échanges d'informations entre lesdits téléphones (10) et lesdits serveurs (4,5,71,72,9) transitant par ladite interface de communications (6), lorsque lesdites sessions s'établissent avec des serveurs (71,72) utilisant des protocoles de communication distincts de ceux des téléphones publics (10).

6. Système selon l'une quelconque des revendications précédentes, **caractérisé en ce que** chacun desdits téléphones publics est équipé de protocoles TCP/IP de communication Internet et **en ce que** les communications entre lesdits téléphones (10) et lesdits serveurs utilisent lesdits protocoles TCP/IP.

7. Système selon l'une quelconque des revendications précédentes, **caractérisé en ce que** lesdits serveurs comprennent des serveurs d'informations ou de fourniture de services (71,72) du Web et de l'Internet et/ou des serveurs d'informations privés (9) et/ou des serveurs (4,5) dédiés à la gestion des téléphones publics (10).

8. Système selon l'une quelconque des revendications précédentes, **caractérisé en ce que** ladite interface de communication (6) comprend des moyens aptes à synchroniser et réguler les sessions d'échanges d'informations entre lesdits téléphones (10) et lesdits serveurs (4,5,71,72,9) transitant par ladite interface de communications (6).

9. Système selon la revendication 10, **caractérisé en ce que** ladite interface de communication (6) comprend des moyens aptes à authentifier les sessions d'échanges d'informations entre lesdits téléphones (10) et lesdits serveurs (4,5,71,72,9) transitant par ladite interface de communications (6).

10. Système selon l'une quelconque des revendications précédentes, **caractérisé en ce que** ladite interface de communication (6) comprend des moyens aptes à détecter les éventuels virus affectant les fichiers transmis lors des sessions d'échanges d'informations entre lesdits téléphones (10) et lesdits serveurs (4,5,71,72,9) transitant par ladite interface de communications (6).

## Patentansprüche

1. Telefonsystem mit einer Anzahl von öffentlichen Telefonen (10), die dazu bestimmt sind, über wenigstens ein Kommunikationsnetz (2, 3) mit Servern (4, 5, 6, 71, 72, 9)zu kommunizieren, **dadurch gekennzeichnet, dass** es eine Kommunikationsschnittstelle (6) aufweist, die geeignet ist, die Verbindungen zwischen den öffentlichen Telefonen (10) und wenigstens einer ersten Gruppe von Servern (5, 71, 72, 9) zu steuern.

2. Telefonsystem nach Anspruch 1, bei dem die öffentlichen Telefone Mittel zur Adressierung jeder Verbindung zu der Kommunikationsschnittstelle (6) umfassen, die als vorgeschriebener Durchgang für alle von den öffentlichen Telefonen (10) ausgehenden Verbindungen in Richtung zu einem Server dient.

3. Telefonsystem nach Anspruch 1, bei dem die Kommunikationsschnittstelle (6) Mittel umfasst, um Anfragen der öffentlichen Telefone (10) an die Server entsprechend der Natur der Anfragen zu leiten.

4. Telefonsystem nach einem der vorstehenden Ansprüche, **dadurch gekennzeichnet, dass** die Adressen der Server (5, 71, 72, 9), deren Verbindungen von der Kommunikationsschnittstelle (6) gesteuert werden, in Speichern der Kommunikationsschnittstelle (6) gespeichert sind, während die öffentlichen Telefone nur die Adresse der Kommunikationsschnittstelle (6) zur Verfügung haben.

5. System nach einem der vorstehenden Ansprüche, **dadurch gekennzeichnet, dass** die Kommunikationsschnittstelle (6) Mittel aufweist, die geeignet sind, die über die Kommunikationsschnittstelle (6) laufenden Informationsaustauschverbindungen zwischen den Telefonen (10) und den Servern (4, 5, 71, 72, 9) umzusetzen, wenn sich diese Verbindungen mit den Servern (71, 72) unter Verwendung von Kommunikationsprotokollen aufbauen, die von denen der öffentlichen Telefone (10) verschieden sind.

6. System nach einem der vorstehenden Ansprüche, **dadurch gekennzeichnet, dass** jedes öffentliche Telefon mit Internetkommunikationsprotokollen TCP/IP ausgerüstet ist, und dass die Verbindungen zwischen den Telefonen (10) und den Servern die Protokolle TCP/IP verwenden.

7. System nach einem der vorstehenden Ansprüche, **dadurch gekennzeichnet, dass** die Server Informationsserver oder Diensteserver (71, 72) des Webs und des Internets umfassen und/oder Server (9) für private Informationen und/oder Server (4, 5), die zur Verwaltung der öffentlichen Telefone (10) bestimmt sind.

8. System nach einem der vorstehenden Ansprüche, **dadurch gekennzeichnet, dass** die Kommunikationsschnittstelle (6) Mittel aufweist, die geeignet sind, um die über die Kommunikationsschnittstelle (6) laufende Informationsaustauschverbindungen zwischen den Telefonen (10) und den Servern (4, 5, 71, 72, 9) zu synchronisieren und zu regeln.

9. System nach Anspruch 10, **dadurch gekennzeichnet, dass** die Kommunikationsschnittstelle (6) Mittel aufweist, die geeignet sind, um die über die Kommunikationsschnittstelle (6) laufenden Informationsaustauschverbindungen zwischen den Telefonen (10) und den Servern (4, 5, 71, 72, 9) zu authentifizieren.

10. System nach einem der vorstehenden Ansprüche, **dadurch gekennzeichnet, dass** die Kommunikationsschnittstelle (6) Mittel umfasst, um eventuelle Viren zu detektieren, welche die während der über die Kommunikationsschnittstelle (6) laufenden Informationsaustauschverbindungen zwischen den Telefonen (10) und den Servern (4, 5, 71, 72, 9) übertragenen Dateien befallen.

## Claims

1. Telephony system (1) comprising a plurality of payphones (10) intended to communicate with servers (4, 5, 6, 71, 72, 9) across at least one communications network (2, 3), **characterized in that** it comprises a communications interface (6) suitable for controlling communications with said payphones (10) and at least one first group of servers (5, 71, 72, 9).

2. Telephony system according to claim 1, in which the payphones comprise means for addressing any communication towards the communications interface (6) which serves as a mandatory route for communications originating from payphones (10) and destined for a server.

3. Telephony system according to claim 1, in which the communications interface (6) comprises means for orienting requests from payphones (10) towards corresponding servers according to the nature of the requests.

4. System according to any one of the preceding claims, **characterized in that** the addresses of the servers (5, 71, 72, 9) whose communications are controlled by the communications interface (6) are stored in memories of said communications interface (6), the payphones then having only the address of the communications interface (6).

5. System according to any one of the preceding claims, **characterized in that** said communications interface (6) comprises means suitable for translating information exchange sessions between said telephones (10) and said servers (4, 5, 71, 72, 9) routed via said communications interface (6), if said sessions are established with servers (71, 72) using communications protocols which differ from those of the payphones (10).

6. System according to any one of the preceding claims, **characterized in that** each of said payphones is equipped with TCP/IP Internet communication protocols, and **in that** communications between said telephones (10) and said servers use said TCP/IP protocols.

7. System according to any one of the preceding claims, **characterized in that** said servers comprise Web and Internet information or service provision servers (71, 72) and/or private information servers (9) and/or servers (4, 5) dedicated to the management of the payphones (10).

8. System according to any one of the preceding claims, **characterized in that** said communications interface (6) comprises means suitable for synchronising and regulating the information exchange sessions between said telephones (10) and said servers (4, 5, 71, 72, 9) routed via said communications interface (6).

9. System according to claim 10, **characterized in that** said communications interface (6) comprises means suitable for authenticating information exchange sessions between said telephones (10) and said servers (4, 5, 71, 72, 9) routed via said communications interface (6).

10. System according to any one of the preceding claims, **characterized in that** said communications interface (6) comprises means suitable for detecting possible viruses affecting files transmitted during information exchange sessions between said telephones (10) and said servers (4, 5, 71, 72, 9) routed via said communications interface (6).
